# EUROPÄISCHE PATENTSCHRIFT

(11) **EP 1 327 873 B1**
(45) Veröffentlichungstag und Bekanntmachung des Hinweises auf die Patenterteilung: **15.10.2008**
(21) Anmeldenummer: 03000299.2
(22) Anmeldetag: 09.01.2003
(51) Int. Cl.: G01M 17/007

(54) **Ferndiagnosesystem für ein Kraftfahrzeug**
System for remote vehicle diagnosis
Système pour le diagnostic à distance d'un véhicule

(30) Priorität: 12.01.2002 DE 10200922
(43) Veröffentlichungstag der Anmeldung: 16.07.2003
(73) Patentinhaber: ADAM OPEL AG, 65423 Rüsselsheim (DE)
(72) Erfinder: Schieck, Rudi, Dipl.-Ing. (FH), 55232 Alzey (DE); Ginsberg, Thomas, Dr.-Ing., 64569 Nauheim (DE)

(56) Entgegenhaltungen:
- EP-A- 0 754 940
- EP-A- 1 069 422
- US-A- 5 758 300
- PATENT ABSTRACTS OF JAPAN vol. 017, no. 215 (P-1527), 27. April 1993 (1993-04-27) & JP 04 350577 A (KOMATSU LTD), 4. Dezember 1992 (1992-12-04)

## Beschreibung

Die Erfindung bezieht sich auf ein Ferndiagnosesystem umfassend ein Kraftfahrzeug mit einem mit einer stationären Diagnoseeinheit koppelbaren, fahrzeugfesten Diagnosestecker zum Auslesen von Daten aus einem Fahrzeug-Netzwerk und/oder über an Fahrzeugkomponenten angeschlossene Diagnoseleitungen.

Ein derartiges Ferndiagnosesystem ist aus der EP 0 754 940 A2 bekannt.

Die DE 199 33 334 A1 offenbart ein Ferndiagnosesystem für ein Kraftfahrzeug mit einer lokalen Diagnoseeinheit und einer Ferndiagnoseeinheit. Die lokale Diagnoseeinheit umfasst eine Anzahl von Steuereinheiten, die an Betriebseinrichtungen des Kraftfahrzeuges angebracht sind und Sensoren zur Bestimmung von Zustandsdaten umfassen. Im Weiteren ist der lokalen Diagnoseeinheit ein erster Zentralprozessor zugeordnet, der direkt oder über ein Diagnosemodul zum Empfang der Zustandsdaten mit den Steuereinheiten verbunden ist. Eine erste Kommunikationsschnittstelle der lokalen Diagnoseeinheit ist zum Datenaustausch mit dem ersten Zentralprozessor verbunden. Die Ferndiagnoseeinheit umfasst einen zweiten Zentralprozessor und eine Benutzerschnittstelle, die zum Datenaustausch mit dem zweiten Zentralprozessor verbunden sowie durch eine Bedienperson bedienbar ist. Darüber hinaus ist der Ferndiagnoseeinheit eine zweite Kommunikationsschnittstelle zugeordnet, die zum zweiten Zentralprozessor gekoppelt ist. Die erste und die zweite Kommunikationsschnittstelle sind zur Datenfernübertragung über einen Kommunikationskanal, beispielsweise über eine Funk- oder eine Satellitenverbindung, miteinander gekoppelt. Dieses Ferndiagnosesystem dient zur Manipulation der Zustandsparameter der Betriebseinrichtungen über die Benutzerschnittstelle.

Darüber hinaus ist aus der DE 35 38 687 A1 eine Diagnoseeinrichtung für Vorrichtungen eines Kraftfahrzeuges bekannt, die mindestens einen im Kraftfahrzeug angeordneten Geber umfasst, dessen Signale der Diagnoseeinrichtung über einen Sender zugeführt werden, wobei der Diagnoseeinrichtung ein Empfänger zugeordnet ist.

Ferner ist aus.der Praxis ein Kraftfahrzeug mit einem Diagnosestecker bekannt, der zur Fehlersuche mit einem Ferndiagnosegerät gekoppelt wird. Zur Kopplung wird in einer Werkstatt in der Regel ein Verbindungskabel verwendet. Das Ferndiagnosegerät ist relativ aufwendig und für die Benutzung durch einen Fachmann gestaltet. Die Auswahl der über ein Netzwerk und Diagnoseleitungen des Kraftfahrzeuges an das Ferndiagnosegerät gesendeten Daten erfolgt an dem Ferndiagnosegerät. Aufgrund der Menge und der Art der Daten, die über den Diagnosestecker übermittelt werden, ist bei einer kabellosen Datenfernübertragung ein relativ hoher Aufwand bezüglich des Senders und des Empfängers erforderlich.

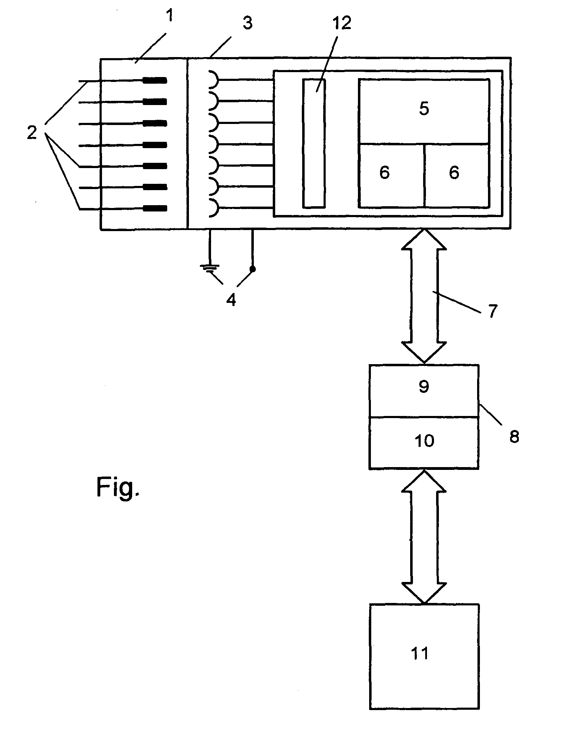

Beim Betreiben einer relativ großen Fahrzeugflotte ist es erforderlich, verschiedene Daten von jedem der Kraftfahrzeuge der Flotte zu überwachen. Beispielsweise sind Inspektionsintervalle einzuhalten, Kilometerstände, Tankinhalte oder dergleichen zu prüfen. Dies erfordert einen hohen Personaleinsatz und gestaltet sich schwierig, falls beispielsweise ein Autovermieter ein Kraftfahrzeug während einer längeren Zeitspanne vermietet. Zur Ermittlung von Daten, die ein Betreiber einer Fahrzeugflotte benötigt, sind die vorbekannten Ferndiagnosesysteme zu teuer, da sie zu aufwendig aufgebaut sind.
Es ist Aufgabe der Erfindung, ein Ferndiagnosesystem der eingangs genannten Art zu schaffen, das, insbesondere für einen Betreiber einer Fahrzeugflotte, zur Ermittlung von Daten dient und darüber hinaus kostengünstig gestaltet ist.
Erfindungsgemäß wird die Aufgabe dadurch gelöst, dass dem Diagnosestecker über eine Schnittstelle ein programmierbarer Adapter zugeordnet ist, der im Betrieb über einen fahrzeugseitigen Sender ausgewählte Daten an einen ortsfesten Zentralrechner übermittelt.
Der programmierbare Adapter stellt eine Auswahl der über den Diagnosestecker bereitgestellten Daten des Kraftfahrzeuges sicher, wobei über die Programmierung des Adapters eine Auswahl der für eine spezielle Diagnose erforderlichen Daten gewährleistet ist. Die Daten können anschließend mittels des Zentralrechners, der beispielsweise als Personal Computer (PC) ausgebildet ist, anwenderspezifisch ausgewertet werden. Durch die gezielte anwenderspezifische Reduzierung der am Diagnosestecker zur Verfügung stehenden Daten seitens des Adapters ist das Senden der ausgewählten Daten mit einem relativ geringen Sendeaufwand zu bewerkstelligen. Falls in einer Werkstatt eine stationäre Diagnoseeinheit angeschlossen werden soll, wird der Adapter von dem Diagnosestecker entfernt und die Diagnoseeinheit an den Diagnosestecker angeschlossen. Als ausgewählte Daten können wartungsrelevante Daten, wie beispielsweise Informationen bezüglich des Ölstands, des Tankinhalts, des Reifendrucks, des Kilometerstands oder des Inspektionsintervalls, aber auch allgemeine Informationen, beispielsweise zur Fahrzeuggeschwindigkeit übertragen werden. Darüber hinaus besteht die Möglichkeit bei einem vorhandenen GPS-System Informationen zu den Ortskoordinaten des Kraftfahrzeuges zu übertragen. Mit den ausgewählten Daten kann z.B. eine Autovermietung über den Zentralrechner feststellen, wo und in welchem Zustand sich das Kraftfahrzeug befindet.
Um eine freie Programmierung des Adapters und ein Zwischenspeichern der über den Diagnosestecker empfangenen Daten sowie des Programms zu ermöglichen, umfasst vorzugsweise der Adapter einen Rechnerbaustein sowie mindestens ein Speichermodul. Das Speichermodul kann als Nur-Lese-Speicher und/oder Lese-Schreib-Speicher ausgebildet sein.
Nach einer vorteilhaften Weiterbildung des Erfindungsgedankens ist der Sender als Mobiltelefon oder Handheld-Computer ausgebildet. Beide Varianten stellen weit verbreitete Sender dar, die multifunktional verwendbar sind und eine zuverlässige sowie kostengünstige Datenübertragung gewährleisten. Die Datenübertragung kann beispielsweise mittels GSM-Standart oder via Internet erfolgen.
Zweckmäßigerweise kommuniziert der Adapter im Betrieb über eine Verbindungsleitung oder eine drahtlose Schnittstelle mit dem Sender. Die Verbindungsleitung kann beispielsweise in einen Halter für das Mobiltelefon oder den Handheld-Computer (PDA)geführt und beim Einsetzen des Senders in den Halter mit diesem verbunden werden. Als drahtlose Schnittstelle kann eine so genannte Blue-Tooth-Schnittstelle Anwendung finden.
Vorzugsweise schreibt der Adapter im Betrieb die Daten in eine vordefinierte Kurznachricht, d.h. eine SMS, ein und schickt diese an den Zentralrechner. In der Kurznachricht werden entsprechende Datenfelder definiert, die der Zentralrechner zu Weiterverarbeitung ausliest.
Zur Automatisierung des Ferndiagnosesystems übermittelt vorteilhafterweise der Sender im Betrieb die Daten selbsttätig an den Zentralrechner. Beispielsweise wählt der permanent über den Adapter aktualisierte Daten empfangende Sender in bestimmten Zeitintervallen den Zentralrechner an und sendet die Daten ohne ein manuelles Zutun eines Benutzers.
Zur Bereitstellung eines benutzerkontrollierten Übermittlungsvorgangs sendet der Sender im Betrieb nach einer Beaufschlagung durch einen Benutzer die Daten an den Zentralrechner.
Damit eine ferngesteuerte Datenabfrage sichergestellt ist, schickt bevorzugt der Sender nach einer Ansteuerung durch den Zentralrechner die Daten an denselben.
Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.
Die Erfindung wird im Folgenden anhand eines Ausführungsbeispieles unter Bezugnahme auf die zugehörige Zeichnung näher erläutert. Die einzige Fig. zeigt eine schematische Darstellung eines erfindungsgemäßen Ferndiagnosesystems.
Das Ferndiagnosesystem für ein Kraftfahrzeug umfasst einen fahrzeugfesten Diagnosestecker 1, der zum Auslesen von Daten aus einem Fahrzeug-Netzwerk und Diagnoseleitungen über entsprechende Verbindungen 2 mit denselben gekoppelt ist. Auf den Diagnosestecker 1 ist ein Adapter 3 aufgesteckt, der zur Anbindung an ein elektrisches Bordnetz mit Anschlüssen 4 versehen ist und zur Kommunikation mit dem Diagnosestecker 1 eine Schnittstelle 12 aufweist. Im Weiteren umfasst der Adapter 3 einen Rechnerbaustein 5 und zwei Speichermodule 6, von denen das eine als Arbeitsspeicher (RAM) und das andere als Nur-Lese-Speicher (ROM) dient. Der Adapter 3 ist frei programmierbar und empfängt durch die Programmierung ausgewählte Daten über den Diagnosestecker 1. Zum Senden der ausgewählten Daten, die über das Fahrzeug-Netzwerk und die Diagnoseleitungen zur Verfügung gestellt werden, ist der Adapter über eine drahtlose Schnittstelle 7 mit einem Mobiltelefon 8 verbunden, in das ein Sender 9 sowie ein Empfänger 10 integriert sind. Über das Mobiltelefon 8 werden die durch die Programmierung des Adapters 3 ausgewählten Daten an einen Zentralrechner 11 gesendet.

Zur Aktualisierung der in dem Zentralrechner 11 gespeicherten Daten sendet der Zentralrechner 11 über das im Kopplungsbereich mit dem Adapter angeordnete Mobiltelefon 8 ein Signal an den Adapter 3, der die über den Diagnosestecker 1 bereitgestellten Daten in eine vordefinierte Kurznachricht einschreibt und durch das Mobiltelefon 8 selbsttätig per "short message service" (SMS) wiederum an den Zentralrechner 11 übermittelt. An dem Zentralrechner 11 können anschließend die Daten ausgewertet werden.

Zur Fehlerdiagnose in einer Werkstatt wird der Adapter 3 von dem Diagnosestecker 11 entfernt und derselbe mit einem stationären Diagnosegerät gekoppelt.

### Bezugszeichenliste

- 1.: Diagnosestecker
- 2.: Verbindung
- 3.: Adapter
- 4.: Anschluss
- 5.: Rechnerbaustein
- 6.: Speichermodul
- 7.: drahtlose Schnittstelle
- 8.: Mobiltelefon
- 9.: Sender
- 10.: Empfänger
- 11.: Zentralrechner
- 12.: Schnittstelle

## Patentansprüche

1. Ferndiagnosesystem umfassend ein Kraftfahrzeug mit einem mit einer stationären Diagnoseeinheit koppelbaren, fahrzeugfesten Diagnosestecker (1) zum Auslesen von Daten aus einem Fahrzeug-Netzwerk und/oder über an Fahrzeugkomponenten angeschlossene Diagnoseleitungen, und einem programmierbaren Adapter (3), wobei dem Diagnosestecker (1) über eine Schnittstelle (12) der programmierbare Adapter (3) zugeordnet ist, der im Betrieb über einen fahrzeugseitigen Sender (9) ausgewählte Daten an einen ortsfesten Zentralrechner (11) übermittelt, wobei der Adapter (3) auf den Diagnosestecker (1) aufgesteckt ist.

2. Ferndiagnosesystem nach Anspruch 1, **dadurch gekennzeichnet, dass** der Adapter (3) einen Rechnerbaustein (5) sowie mindestens ein Speichermodul (6) umfasst.

3. Ferndiagnosesystem nach Anspruch 1, **dadurch gekennzeichnet, dass** der Sender (9) als Mobiltelefon (8) oder Handheld-Computer ausgebildet ist.

4. Ferndiagnosesystem nach einem der Ansprüche 1 bis 3, **dadurch gekennzeichnet, dass** der Adapter (3) im Betrieb über eine Verbindungsleitung oder eine drahtlose Schnittstelle (7) mit dem Sender (9) kommuniziert.

5. Ferndiagnosesystem nach einem der Ansprüche 1 bis 4, **dadurch gekennzeichnet, dass** der Adapter (3) bei Betrieb die Daten in eine vordefinierte Kurznachricht, d. h. eine SMS, einschreibt und diese an den Zentralrechner (11) schickt.

6. Ferndiagnosesystem nach einem der Ansprüche 1 bis 5, **dadurch gekennzeichnet, dass** der Sender (9) im Betrieb die Daten selbsttätig an den Zentralrechner (11) übermittelt.

7. Ferndiagnosesystem nach einem der Ansprüche 1 bis 5, **dadurch gekennzeichnet, dass** der Sender (9) im Betrieb nach einer Beaufschlagung durch einen Benutzer die Daten an den Zentralrechner (11) sendet.

8. Ferndiagnosesystem nach einem der Ansprüche 1 bis 7, **dadurch gekennzeichnet, dass** der Sender (9) im Betrieb nach einer Ansteuerung durch den Zentralrechner (11) die Daten an denselben schickt.

## Claims

1. System for remote vehicle diagnosis comprising a motor vehicle equipped with a stationary diagnosis unity which can be connected with a diagnosis connector (19) affixed to the frame of the motor vehicle for the readout of data from a network of a motor vehicle and/or by means of diagnosis cables connected with the components of the motor vehicle and equipped with a programmable adapter (3) wherein the diagnosis connector (1) is attached to the programmable adapter (3) by means of an interface (12) and which during its operation transmits selected data to a stationary main computer (11) through a transmitter (9) attached on one side of the motor vehicle wherein the adapter (3) is attached to the diagnosis connector (1).

2. System for remote vehicle diagnosis according to claim 1, **characterized in that** the adapter (3) comprises a component of the computer (5) and at least one memory module (6).

3. System for remote vehicle diagnosis according to claim 1, **characterized in that** the transmitter (9) is developed as mobile phone (8) or as handheld computer.

4. System for remote vehicle diagnosis according to one of the claims 1 to 3, **characterized in that** the adapter (3) during its operation communicates with the transmitter (9) by means of a connection cable or a wireless interface (7).

5. System for remote vehicle diagnosis according to one of the claims 1 to 4, **characterized in that** the adapter (3) during its operation writes the data on a predefined short message it is said on an SMS and sends this to the main computer (11).

6. System of remote vehicle diagnosis according to one of the claims 1 to 5, **characterized in that** the transmitter (9) during its operation independently transmits the data to the main computer (11).

7. System for remote vehicle diagnosis according to one of the claims 1 to 5, **characterized in that** the transmitter (9) during its operation after an admission by a user sends the data to the main computer (11).

8. System for remote vehicle diagnosis according to one of the claims 1 to 7, **characterized in that** the transmitter (9) during its operation after activation through the main computer (11) sends the data to it.

## Revendications

1. Système pour le diagnostic à distance comportant un véhicule avec un connecteur de diagnostic (1) fixé au véhicule capable d'être couplée avec une unité de diagnostic stationnaire, pour la lecture des données à partir d'un réseau de véhicule et/ou au travers des câbles de diagnostic connectés aux composants du véhicule, et un adaptateur (3) programmable, étant donné qu'au connecteur de diagnostic (1) est attribué, à travers une interface (12), l'adaptateur (3) programmable, qui communique en fonctionnement, par l'intermédiaire d'un émetteur côté véhicule (9), des données sélectionnées à un ordinateur central (11) fixe, l'adaptateur (3) étant monté sur le connecteur de diagnostic (1).

2. Système pour le diagnostic à distance selon revendication 1, **caractérisé en ce que** l'adaptateur (3) comporte un module d'ordinateur (5) ainsi qu'au moins un module mémoire (6).

3. Système pour le diagnostic à distance selon revendication 1, **caractérisé en ce que** l'émetteur (9) est réalisé sous forme d'un téléphone portable (8) ou bien comme ordinateur portatif.

4. Système pour le diagnostic à distance selon l'une des revendications 1 à 3, **caractérisé en ce que** l'adaptateur (3) en fonctionnement communique avec l'émetteur (9) au travers un fil de connexion ou bien une interface (7) sans fil.

5. Système pour le diagnostic à distance selon l'une des revendications 1 à 4, **caractérisé en ce que** l'adaptateur (3) en fonctionnement enregistre les données sous forme d'un message prédéfini, c'est à dire un SMS et envois ce dernier à l'ordinateur central (11).

6. Système pour le diagnostic à distance selon l'une des revendications 1 à 5, **caractérisé en ce que** l'émetteur (9) en état de fonctionnement communique les données à l'ordinateur central (11) d'une façon automatique.

7. Système pour le diagnostic à distance selon l'une des revendications 1 à 5, **caractérisé en ce que** l'émetteur (9) en état de fonctionnement envois les données introduites par un utilisateur, à l'ordinateur central (11).

8. Système pour le diagnostic à distance selon l'une des revendications 1 à 7, **caractérisé en ce que** l'émetteur (9) en état de fonctionnement, à la suite d'une commande du côté de l'ordinateur central (11), envois les données aux mêmes.
